# EUROPEAN PATENT SPECIFICATION

(11) **EP 3 905 564 B1**
(45) Date of publication and mention of the grant of the patent: **18.01.2023**
(21) Application number: 21176142.4
(22) Date of filing: 29.09.2017
(51) Int. Cl.: H04L 1/00, H04B 7/06, H04L 1/06, H04W 52/02

(54) **MIMO (MULTIPLE INPUT MULTIPLE OUTPUT) LAYER TRANSMISSION FOR NR (NEW RADIO)**
MIMO (MULTIPLE INPUT MULTIPLE OUTPUT)-SCHICHTÜBERTRAGUNG FÜR NR (NEW RADIO)
ÉMISSION DE COUCHES MIMO (ENTRÉES ET SORTIES MULTIPLES) POUR NR (NOUVELLE RADIO)

(30) Priority: 02.11.2016 US 201662416625 P; 27.01.2017 US 201762451421 P
(43) Date of publication of application: 03.11.2021
(62) Divisional of application: 17784496.6
(73) Proprietor: Apple Inc., Cupertino, CA 95014 (US)
(72) Inventor: DAVYDOV, Alexei, 603132 Nizhny Novgorod (RU); LEE, Wook Bong, Pleasanton, CA, 94588 (US); MOROZOV, Gregory V., 603107 Nizhny Novgorod (RU); HE, Hong, Sunnyvale, CA, 94087 (US); SERGEEV, Victor, 603163 Nizhny Novgorod (RU)
(74) Representative: Lang, Johannes

(56) References cited:
- EP-A1- 2 930 969
- EP-A1- 2 945 414
- WO-A1-2015/171050
- WO-A1-2016/122372
- WO-A2-2007/108751
- US-A1- 2011 243 079
- INTEL CORPORATION: "On codeword to MIMO layer mapping", 3GPP DRAFT; R1-1611973 ON CODEWORD TO MIMO LAYER MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 6 November 2016 (2016-11-06), XP051190783, Retrieved from the Internet: URL:http://www.3gpp.org/ftp/tsg_ran/WG1_RL 1/TSGR1_87/Docs/ [retrieved on 2016-11-06]

## Description

### REFERENCE TO RELATED APPLICATIONS

This application claims the benefit of U.S. Provisional Applications No. 62/416,625 filed November 2, 2016, entitled "MIMO LAYER TRANSMISSION FOR NR", and 62/451,421 filed January 27, 2017, entitled "MIMO LAYER TRANSMISSION FOR NR".

### FIELD

The present disclosure relates to wireless technology, and more specifically to techniques for facilitating codeword to MIMO (Multiple Input Multiple Output) layer mapping and transmission in LTE (Long Term Evolution) 5G (Fifth Generation) NR (New Radio).

### BACKGROUND

LTE (Long Term Evolution) supports multiple CWs (Codewords), where each CW can be mapped to one or two MIMO (Multiple Input Multiple Output) layers, depending on the total number of MIMO layers.

Support of multiple CWs for LTE was mainly introduced to facilitate advanced receiver operation for SU (Single User)-MIMO and to improve the link adaptation accuracy. More specifically, for transmission with multiple CWs, it is possible to apply a codeword level interference cancellation (CW-IC) receiver to better suppress interference from the co-scheduled MIMO layers. However, recent Rel-12 (LTE Release 12) evaluations of advanced receivers for LTE in RAN4 (RAN (Radio Access Network) WG4 (Working Group 4)) indicated that the link-level performance difference of CW-IC comparing to symbol level R (Reduced complexity)-ML (Maximum Likelihood) receiver was not significant enough to justify the use of a CW-IC receiver in the case of two MIMO layers.

The patent document WO2016122372 A1 discloses that, within the reported UE capabilities, the eNodeB selects and signals the configured number of MIMO streams per Component Carrier. The patent document EP2945414 A1 discloses the details of RRC signalling related to the number of codewords, the number of MIMO layers and the mapping between codewords and layers.

### BRIEF DESCRIPTION OF THE DRAWINGS

**FIG. 1** is a block diagram illustrating an example user equipment (UE) useable in connection with various aspects described herein.
**FIG. 2** is a diagram illustrating example components of a device that can be employed in accordance with various aspects discussed herein.
**FIG. 3** is a diagram illustrating example interfaces of baseband circuitry that can be employed in accordance with various aspects discussed herein.
**FIG. 4** is a block diagram illustrating a system employable at a UE (User Equipment) that facilitates mapping of one or more codewords to one or more MIMO (Multiple Input Multiple Output) layers for 5G (Fifth Generation) NR (New Radio), according to various aspects described herein.
**FIG.** 5 is a block diagram illustrating a system employable at a BS (Base Station) that facilitates mapping of one or more codewords to one or more MIMO layers for 5G NR, according to various aspects described herein.
**FIG. 6** is a diagram illustrating CW (Codeword) to MIMO (Multiple Input Multiple Output) layer mappings that can be employed in a LTE (Long Term Evolution) system for one to four MIMO layers, in connection with various aspects discussed herein.
**FIG.** 7 is a diagram illustrating CW to MIMO layer mapping for NR based on a first set of techniques, according to various aspects discussed herein.
**FIG. 8** is a diagram illustrating CW to MIMO layer mapping for NR based on a second set of techniques, according to various aspects discussed herein.
**FIG. 9** is a flow diagram of an example method employable at a UE that facilitates configuration of a maximum number of MIMO layers at the UE, according to various aspects discussed herein.
**FIG. 10** is a flow diagram of an example method employable at a BS that facilitates configuration of a maximum number of MIMO layers at a UE, according to various aspects discussed herein.
**FIG. 11** is a flow diagram of an example method employable at a 5G NR communication device (e.g., UE, BS, etc.) that facilitates mapping of one or more codewords to one or more MIMO layers based on the first set of techniques or the second set of techniques, according to various aspects discussed herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items may be distinct or they may be the same, although in some situations the context may indicate that they are distinct or that they are the same.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

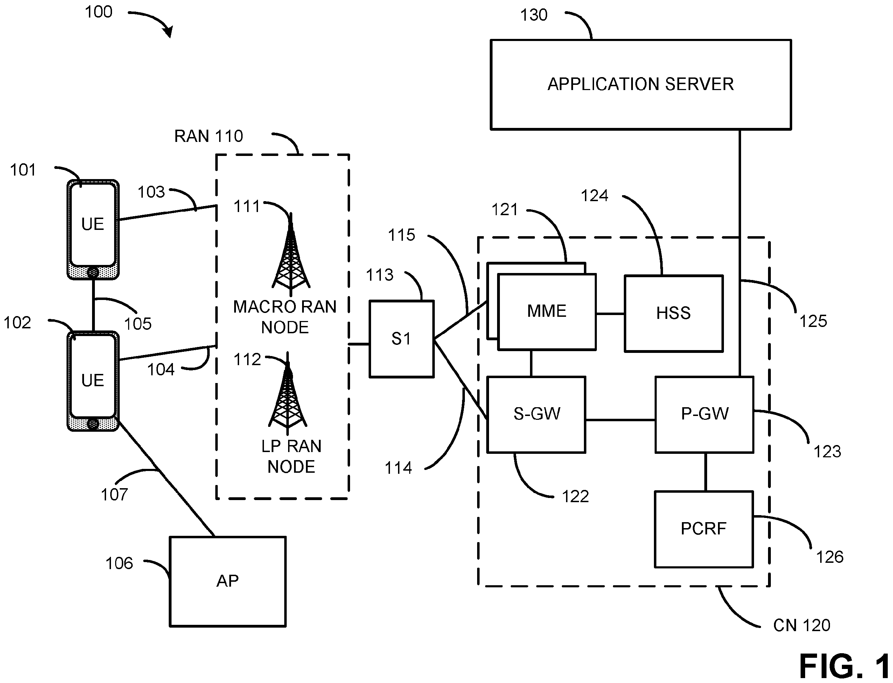

Embodiments described herein may be implemented into a system using any suitably configured hardware and/or software. **FIG. 1** illustrates an architecture of a system 100 of a network in accordance with some embodiments. The system 100 is shown to include a user equipment (UE) 101 and a UE 102. The UEs 101 and 102 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 101 and 102 can comprise an Internet of Things (loT) UE, which can comprise a network access layer designed for low-power loT applications utilizing short-lived UE connections. An loT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or loT networks. The M2M or MTC exchange of data may be a machine-initiated exchange of data. An loT network describes interconnecting loT UEs, which may include uniquely identifiable embedded computing devices (within the Internet infrastructure), with short-lived connections. The loT UEs may execute background applications (e.g., keep-alive messages, status updates, etc.) to facilitate the connections of the loT network.

The UEs 101 and 102 may be configured to connect, e.g., communicatively couple, with a radio access network (RAN) 110 - the RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as a connection consistent with any IEEE 802.11 protocol, wherein the AP 106 would comprise a wireless fidelity (WiFi^{®}) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 11 1 and 112 can fulfill various logical functions for the RAN 110 including, but not limited to, radio network controller (RNC) functions such as radio bearer management, uplink and downlink dynamic radio resource management and data packet scheduling, and mobility management.

In accordance with some embodiments, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 101 and 102. The physical downlink control channel (PDCCH) may carry information about the transport format and resource allocations related to the PDSCH channel, among other things. It may also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 111 and 112 based on channel quality information fed back from any of the UEs 101 and 102. The downlink resource assignment information may be sent on the PDCCH used for (e.g., assigned to) each of the UEs 101 and 102.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 110 is shown to be communicatively coupled to a core network (CN) 120 -via an S1 interface 113. In embodiments, the CN 120 may be an evolved packet core (EPC) network, a NextGen Packet Core (NPC) network, or some other type of CN. In this embodiment the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this embodiment, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities may include lawful intercept, charging, and some policy enforcement.

The P-GW 123 may terminate an SGi interface toward a PDN. The P-GW 123 may route data packets between the EPC network 123 and external networks such as a network including the application server 130 (alternatively referred to as application function (AF)) via an Internet Protocol (IP) interface 125. Generally, the application server 130 may be an element offering applications that use IP bearer resources with the core network (e.g., UMTS Packet Services (PS) domain, LTE PS data services, etc.). In this embodiment, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Enforcement Function (PCRF) 126 is the policy and charging control element of the CN 120. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 may be communicatively coupled to the application server 130 via the P-GW 123. The application server 130 may signal the PCRF 126 to indicate a new service flow and select the appropriate Quality of Service (QoS) and charging parameters. The PCRF 126 may provision this rule into a Policy and Charging Enforcement Function (PCEF) (not shown) with the appropriate traffic flow template (TFT) and QoS class of identifier (QCI), which commences the QoS and charging as specified by the application server 130.

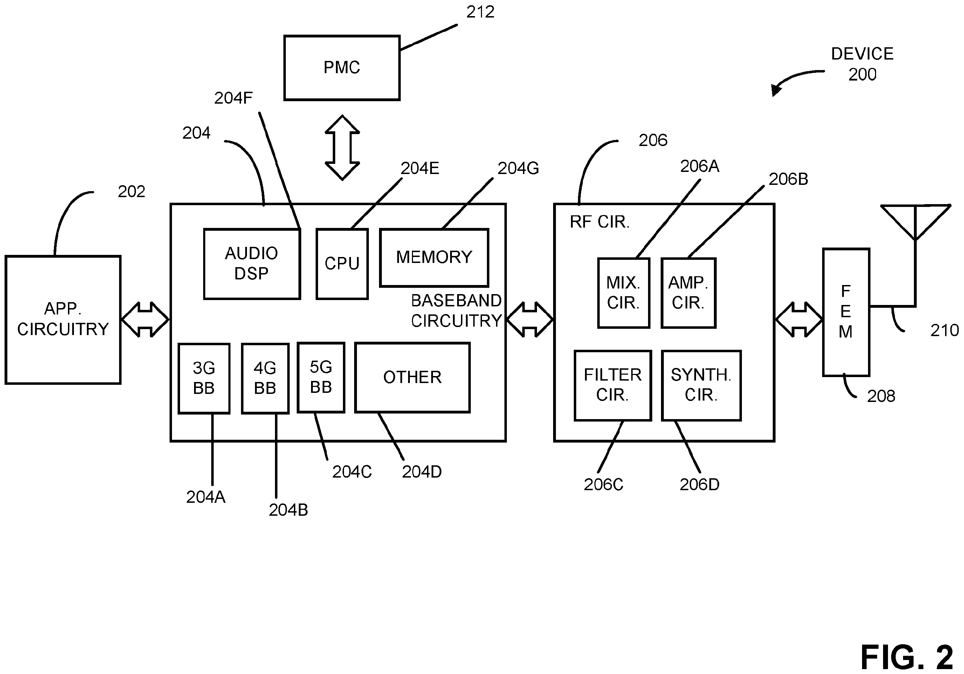

**FIG. 2** illustrates example components of a device 200 in accordance with some embodiments. In some embodiments, the device 200 may include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 may be included in a UE or a RAN node. In some embodiments, the device 200 may include less elements (e.g., a RAN node may not utilize application circuitry 202, and instead include a processor/controller to process IP data received from an EPC). In some embodiments, the device 200 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 200. In some embodiments, processors of application circuitry 202 may process IP data packets received from an EPC.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) may handle various radio control functions that enable communication with one or more radio networks via the RF circuitry 206. In other embodiments, some or all of the functionality of baseband processors 204A-D may be included in modules stored in the memory 204G and executed via a Central Processing Unit (CPU) 204E. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include convolution, tailbiting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include one or more audio digital signal processor(s) (DSP) 204F. The audio DSP(s) 204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the receive signal path of the RF circuitry 206 may include mixer circuitry 206a, amplifier circuitry 206b and filter circuitry 206c. In some embodiments, the transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or bandpass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect.

In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c.

In some embodiments, the mixer circuitry 206a of the receive signal path and the mixer circuitry 206a of the transmit signal path may include two or more mixers and may be arranged for quadrature downconversion and upconversion, respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion and direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206.

In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider.

The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer.

In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path which may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210. In various embodiments, the amplification through the transmit or receive signal paths may be done solely in the RF circuitry 206, solely in the FEM 208, or in both the RF circuitry 206 and the FEM 208.

In some embodiments, the FEM circuitry 208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the PMC 212 may manage power provided to the baseband circuitry 204. In particular, the PMC 212 may control power-source selection, voltage scaling, battery charging, or DC-to-DC conversion. The PMC 212 may often be included when the device 200 is capable of being powered by a battery, for example, when the device is included in a UE. The PMC 212 may increase the power conversion efficiency while providing desirable implementation size and heat dissipation characteristics.

While FIG. 2 shows the PMC 212 coupled only with the baseband circuitry 204. However, in other embodiments, the PMC 2 12 may be additionally or alternatively coupled with, and perform similar power management operations for, other components such as, but not limited to, application circuitry 202, RF circuitry 206, or FEM 208.

In some embodiments, the PMC 212 may control, or otherwise be part of, various power saving mechanisms of the device 200. For example, if the device 200 is in an RRC_Connected state, where it is still connected to the RAN node as it expects to receive traffic shortly, then it may enter a state known as Discontinuous Reception Mode (DRX) after a period of inactivity. During this state, the device 200 may power down for brief intervals of time and thus save power.

If there is no data traffic activity for an extended period of time, then the device 200 may transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 202 and processors of the baseband circuitry 204 may be used to execute elements of one or more instances of a protocol stack. For example, processors of the baseband circuitry 204, alone or in combination, may be used execute Layer 3, Layer 2, or Layer 1 functionality, while processors of the application circuitry 204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

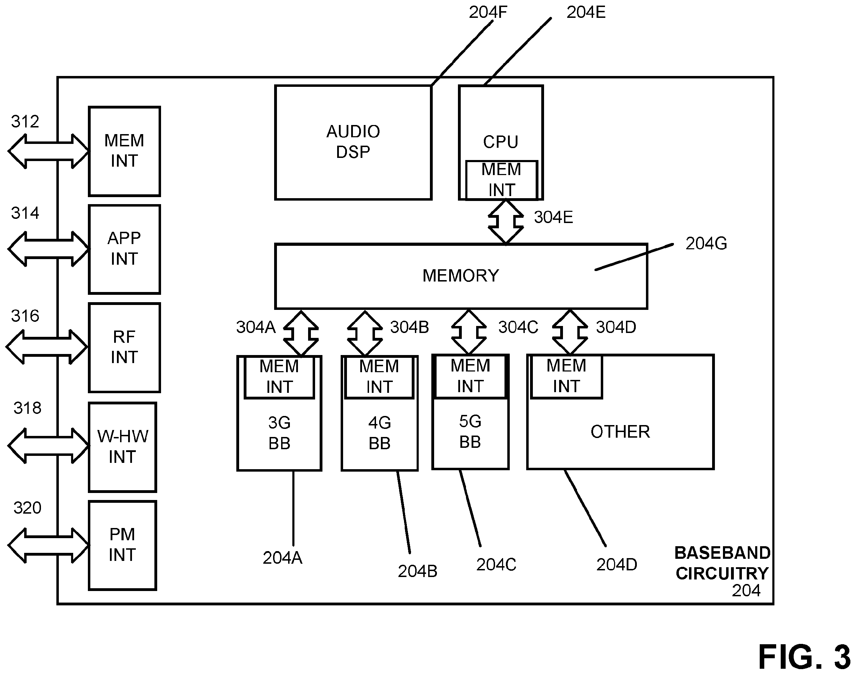

**FIG. 3** illustrates example interfaces of baseband circuitry in accordance with some embodiments. As discussed above, the baseband circuitry 204 of FIG. 2 may comprise processors 204A-204E and a memory 204G utilized by said processors. Each of the processors 204A-204E may include a memory interface, 304A-304E, respectively, to send/receive data to/from the memory 204G.

The baseband circuitry 204 may further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 320 (e.g., an interface to send/receive power or control signals to/from the PMC 212).

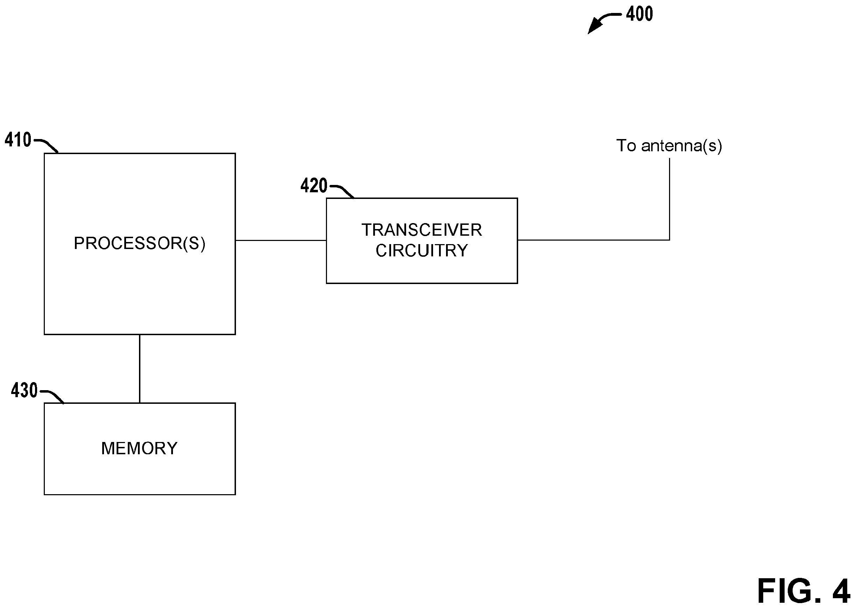

Referring to **FIG. 4**, illustrated is a block diagram of a system 400 employable at a UE (User Equipment) that facilitates mapping of one or more codewords to one or more MIMO layers for 5G NR, according to various aspects described herein. System 400 can include one or more processors 410 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), transceiver circuitry 420 (e.g., comprising one or more of transmitter circuitry or receiver circuitry, which can employ common circuit elements, distinct circuit elements, or a combination thereof), and a memory 430 (which can comprise any of a variety of storage mediums and can store instructions and/or data associated with one or more of processor(s) 410 or transceiver circuitry 420). In various aspects, system 400 can be included within a user equipment (UE). As described in greater detail below, system 400 can facilitate configuration of the UE for MIMO transmissions, as well as mapping of codeword(s) to MIMO layer(s) based on techniques discussed herein.

In various aspects discussed herein, signals and/or messages can be generated and output for transmission, and/or transmitted messages can be received and processed. Depending on the type of signal or message generated, outputting for transmission (e.g., by processor(s) 410, processor(s) 510, etc.) can comprise one or more of the following: generating a set of associated bits that indicate the content of the signal or message, coding (e.g., which can include adding a cyclic redundancy check (CRC) and/or coding via one or more of turbo code, low density parity-check (LDPC) code, tailbiting convolution code (TBCC), etc.), scrambling (e.g., based on a scrambling seed), modulating (e.g., via one of binary phase shift keying (BPSK), quadrature phase shift keying (QPSK), or some form of quadrature amplitude modulation (QAM), etc.), and/or resource mapping (e.g., to a scheduled set of resources, to a set of time and frequency resources granted for uplink transmission, etc.). Depending on the type of received signal or message, processing (e.g., by processor(s) 410, processor(s) 510, etc.) can comprise one or more of: identifying physical resources associated with the signal/message, detecting the signal/message, resource element group deinterleaving, demodulation, descrambling, and/or decoding.

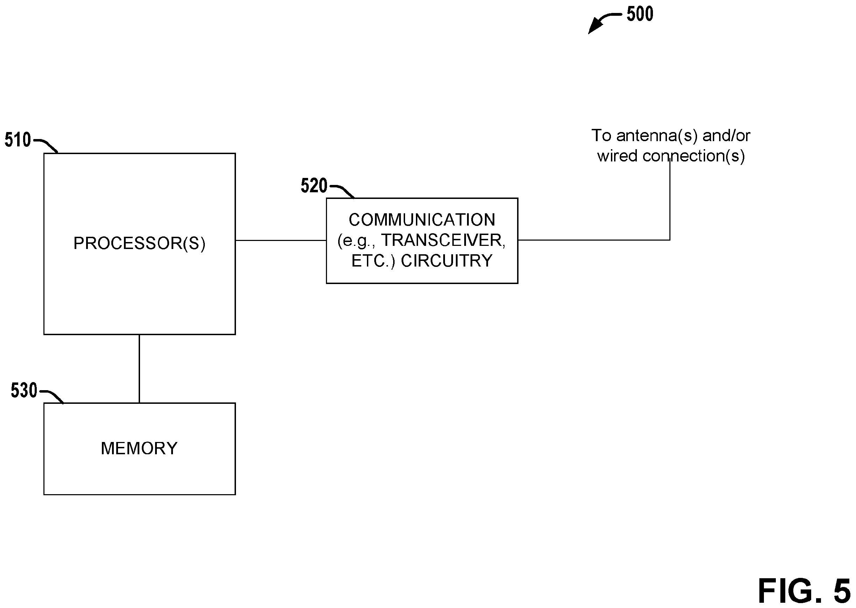

Referring to **FIG. 5**, illustrated is a block diagram of a system 500 employable at a BS (Base Station) that facilitates mapping of one or more codewords to one or more MIMO layers for 5G NR, according to various aspects described herein. System 500 can include one or more processors 510 (e.g., one or more baseband processors such as one or more of the baseband processors discussed in connection with FIG. 2 and/or FIG. 3) comprising processing circuitry and associated memory interface(s) (e.g., memory interface(s) discussed in connection with FIG. 3), communication circuitry 520 (e.g., which can comprise circuitry for one or more wired (e.g., X2, etc.) connections and/or transceiver circuitry that can comprise one or more of transmitter circuitry (e.g., associated with one or more transmit chains) or receiver circuitry (e.g., associated with one or more receive chains), wherein the transmitter circuitry and receiver circuitry can employ common circuit elements, distinct circuit elements, or a combination thereof), and memory 530 (which can comprise any of a variety of storage mediums and can store instructions and/or data associated with one or more of processor(s) 510 or communication circuitry 520). In various aspects, system 500 can be included within an Evolved Universal Terrestrial Radio Access Network (E-UTRAN) Node B (Evolved Node B, eNodeB, or eNB), next generation Node B (gNodeB or gNB) or other base station in a wireless communications network. In some aspects, the processor(s) 510, communication circuitry 520, and the memory 530 can be included in a single device, while in other aspects, they can be included in different devices, such as part of a distributed architecture. As described in greater detail below, system 500 can facilitate configuration of one or more UEs for MIMO transmissions, as well as mapping of codeword(s) to MIMO layer(s) based on techniques discussed herein.

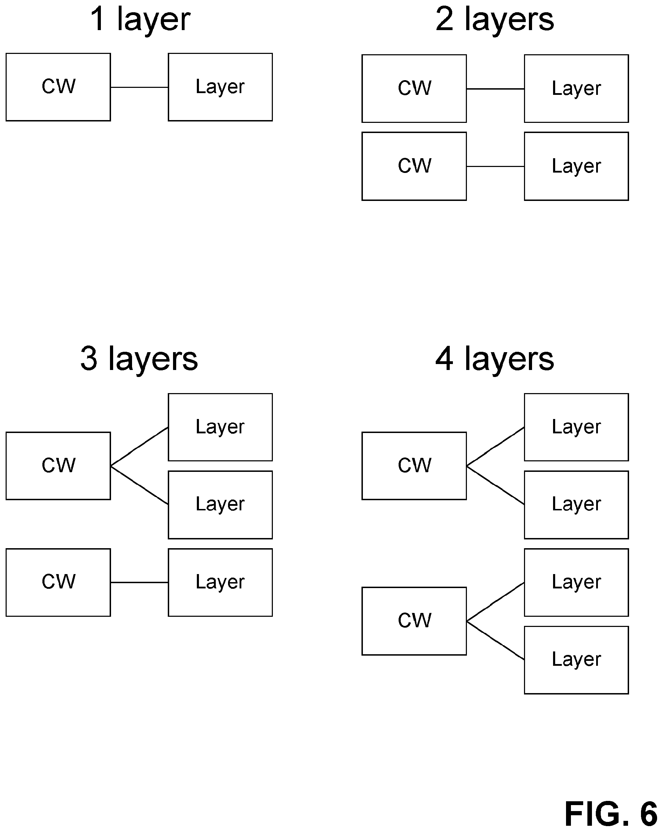

Referring to **FIG. 6**, illustrated is a diagram showing CW (Codeword) to MIMO (Multiple Input Multiple Output) layer mappings that can be employed in a LTE (Long Term Evolution) system for one to four MIMO layers, in connection with various aspects discussed herein. As can be seen in FIG. 4, in LTE systems, two CWs are employed (e.g., as generated by processor(s) 510 and mapped by processor(s) 510 to MIMO layers for transmission by communication circuitry 520 for DL (Downlink), or as generated by processor(s) 410 and mapped by processor(s) 410 to MIMO layers for transmission by transceiver circuitry 420 for UL (Uplink)) in scenarios involving two or more MIMO layers.

One aspect of supporting multiple CWs is link adaptation on the MIMO layers. For example, if the MIMO layers have a substantial difference in the received SINR (Signal-to-Interference-plus-Noise Ratio), the transmission efficiency can be improved by independent selection of the MCS (Modulation and Coding Scheme) per MIMO layer, which can be facilitated by the design of FIG. 6, for LTE systems. However, 5G (Fifth Generation) NR (New Radio) can employ beam-based operation for data transmission, thus in most scenarios, two MIMO layers (e.g., generated by processor(s) 510 or processor(s) 410) can be transmitted (e.g., by communication circuitry 520 or transceiver circuitry 420, respectively) using the same beam from a single TRP (e.g., employing system 500) or UE (e.g., employing system 400) using orthogonal polarizations for the two MIMO layers (e.g., horizontal and vertical, etc.). In such scenarios, the expected SINR difference on those two MIMO layers is low enough that multiple CWs are not necessary, and a single CW for 2 MIMO layers can be sufficient.

For the wide system bandwidth of NR, support for a configurable bandwidth for the UE has been proposed as a means to adapt the operating bandwidth of the UE to traffic demands and thereby optimize UE power consumption. In various aspects discussed herein, a similar power consumption optimization can be employed for SU-MIMO (e.g., via configuration signaling (e.g., higher layer, DCI (Downlink Control Information), etc.) generated by processor(s) 510, transmitted via communication circuitry 520, received via transceiver circuitry 420, and processed by processor(s) 410). For example, although a UE can support large number of MIMO layers (e.g., up to 4 or possibly more) for a given carrier and can perform received signal processing (e.g., via processor(s) 510) for that maximum number of MIMO layers for reception (e.g., via transceiver circuitry 420) of PDSCH (Physical Downlink Shared Channel), reception (e.g., via transceiver circuitry 420) via the maximum number of MIMO layers is not always optimal, given variations in network traffic. To facilitate power efficient UE operation (e.g., by turning off some of the receiving or transmitting chains of transceiver circuitry 420) that can be optimized to a given traffic load, an indication of the maximum number of MIMO layers (e.g., via configuration signaling (e.g., higher layer, DCI (Downlink Control Information), etc.) generated by processor(s) 510, transmitted via communication circuitry 520, received via transceiver circuitry 420, and processed by processor(s) 410) can be supported for NR in various aspects discussed herein.

In various aspects discussed herein, various sets of techniques are disclosed that can facilitate MIMO layer DL (e.g., of data/signaling generated by processor(s) 510, transmitted via communication circuitry 520, received via transceiver circuitry 420, and processed by processor(s) 410) or UL (e.g., generated by processor(s) 410, transmitted via transceiver circuitry 420, received via communication circuitry 520, and processed by processor(s) 510) transmission in 5G NR systems.

In a first set of techniques associated with CW to MIMO layer mapping (e.g., by processor(s) 510 or processor(s) 410) for NR, a single CW can be used (e.g., by processor(s) 510 or processor(s) 410) for 1 and 2 MIMO layer transmission (e.g., by communication circuitry 520 or transceiver circuitry 420, respectively) and two CWs can be used (e.g., by processor(s) 510 or processor(s) 410) for more than 2 MIMO layer transmission (e.g., by communication circuitry 520 or transceiver circuitry 420, respectively). The first set of techniques can be used (e.g., by processor(s) 410 and processor(s) 510) to reduce the overhead for UCI (e.g., generated by processor(s) 410, transmitted via transceiver circuitry 420, received via communication circuitry 520, and processed by processor(s) 510).

In a second set of techniques associated with CW to MIMO layer mapping (e.g., by processor(s) 510 or processor(s) 410) for NR, according to the claimed invention, a single CW can be used (e.g., by processor(s) 510 or processor(s) 410) for transmission (e.g., by communication circuitry 520 or transceiver circuitry 420, respectively) of up to 4 MIMO layers, and two CWs can be used (e.g., by processor(s) 510 or processor(s) 410) for transmission (e.g., via communication circuitry 520 or transceiver circuitry 420, respectively) of more than 4 MIMO layers. The second set of techniques can be used (e.g., by processor(s) 410 and processor(s) 510) to reduce the overhead for UCI (e.g., generated by processor(s) 410, transmitted via transceiver circuitry 420, received via communication circuitry 520, and processed by processor(s) 510).

In a third set of techniques, signaling (e.g., generated by processor(s) 510, transmitted via communication circuitry 520, received via transceiver circuitry 420, and processed by processor(s) 410) can be employed (e.g., by system 500 and system 400) to indicate to the UE (e.g., employing system 400) the maximum number of MIMO layers, which can indicate to the UE that the BS (e.g., gNB, etc., employing system 500) will not schedule MIMO transmission with number of MIMO layer above the indicated value. The indicated number of MIMO layer (e.g., via a MIMO layer indicator, etc.) can be used at the UE to autonomously select (e.g., via processor(s) 410) the number of receiving or transmitting chains, which can facilitate reduced UE power consumption. Additionally, the MIMO layer indicator can be used (e.g., by processor(s) 410 and/or processor(s) 510) to determine DCI (Downlink Control Information) and UCI (Uplink Control Information) payload sizes and to reduce the control signaling overhead. For example, if the indicated maximum number of MIMO layers corresponds to a single codeword, the number of modulation and coding scheme (MCS), redundancy version (RV), new data indicator (NDI) and HARQ process identity in DCI can be equal to one. Otherwise, the number of modulation and coding scheme (MCS), redundancy version (RV), new data indicator (NDI) and HARQ process identity in DCI can be equal to two, according to the maximum number of codewords supported by the system. In another example, if the indicated maximum number of MIMO layers corresponds to a single codeword, the number of channel quality indicators (CQI) can be equal to one. Otherwise, the number of reported CQI can be equal to two, according to the maximum number of codewords supported by the system. The payload size for precoding matrix indicator (PMI) and rank indicator (RI) can be also set according to the maximum number of MIMO layers. In other aspects, the default assumption for the maximum number of MIMO layers before indication to the UE can be according to a single codeword.

In various aspects, the third set of techniques can be employed in conjunction with one of the first set of techniques or the second set of techniques.

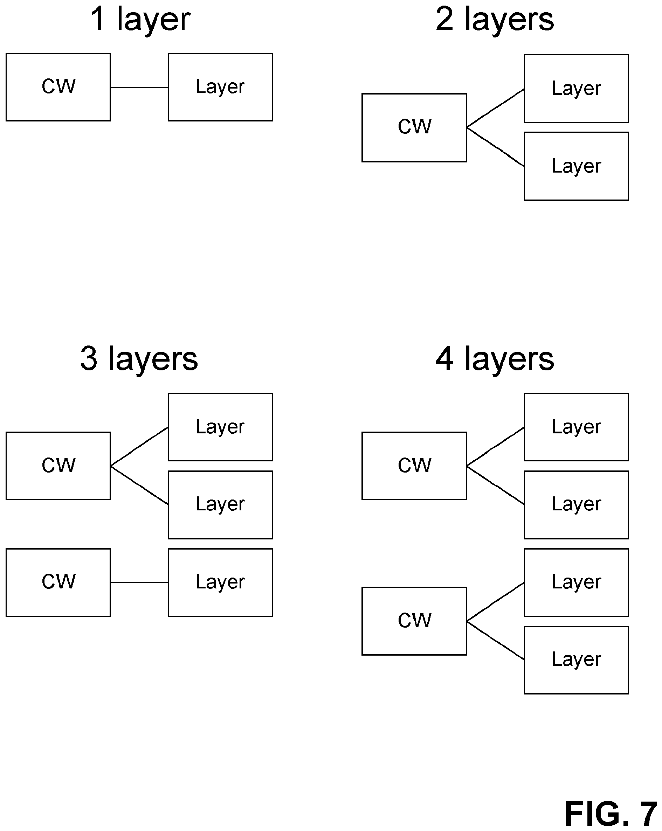

Referring to **FIG. 7**, illustrated is a diagram showing CW to MIMO layer mapping for NR based on the first set of techniques, according to various aspects discussed herein. In the first set of techniques for CW to MIMO layer mapping (e.g., by processor(s) 510 or processor(s) 410) in NR, for 1 or 2 MIMO layer transmission (e.g., by communication circuitry 520 or transceiver circuitry 420, respectively) a single CW can be employed (e.g., by processor(s) 510 or processor(s) 410) for efficient operation for NR. Therefore, in the first set of techniques, a single CW can be employed (e.g., by processor(s) 510 or processor(s) 410) for transmission (e.g., by communication circuitry 520 or transceiver circuitry 420, respectively) of 1 or 2 MIMO layers (e.g., which can correspond to one or two polarizations, respectively, of a single beam from a single BS or UE). For more than two MIMO layers, multiple beams from the same UE or the same or different TRPs (e.g., each of which can employ a system 500) can be used in NR, which can involve multiple CWs, for more accurate adaptation of MCS to the possibly different SINRs on the received beams. Therefore, in aspects employing the first set of techniques, multiple CWs can be supported starting for 3 or more MIMO layers (e.g., as mapped by processor(s) 410 or processor(s) 510 of the same or a different system 500), as shown in FIG. 7.

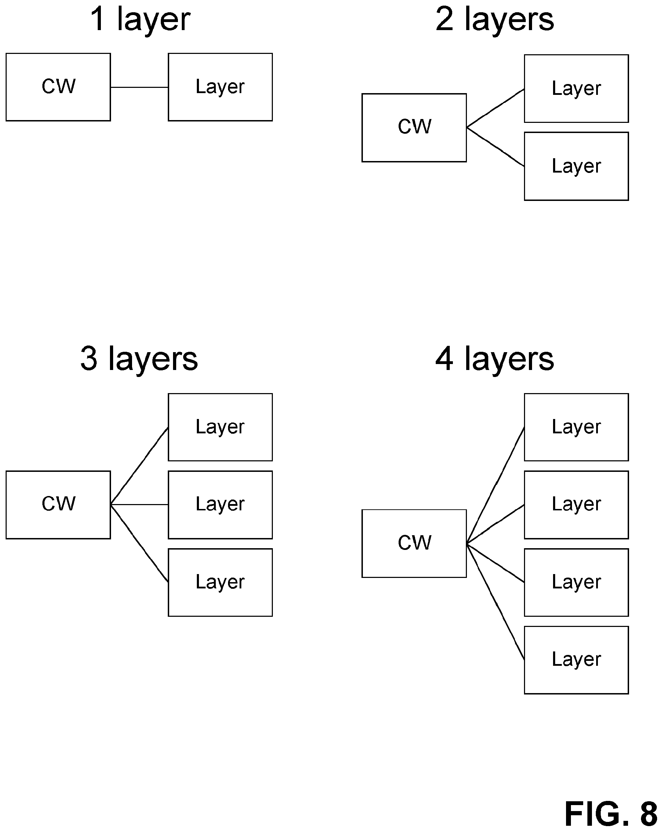

Referring to **FIG. 8**, illustrated is a diagram showing CW to MIMO layer mapping for NR based on the second set of techniques, according to various aspects discussed herein. In aspects employing the second set of techniques, according to the claimed invention, a single CW can be employed (e.g., generated and mapped by processor(s) 510 or processor(s) 410) for transmission (e.g., by communication circuitry 520 or transceiver circuitry 420, respectively) of one to four MIMO layers, and two CWs can be employed (e.g., generated and mapped by processor(s) 410 or processor(s) 510 of the same or a different system 500) for more than four MIMO layers.

In the third set of techniques, configuration signaling (e.g., higher layer signaling or DCI (Downlink Control Information) generated by processor(s) 510, transmitted via communication circuitry 520, received via transceiver circuitry 420, and processed by processor(s) 410) can be employed to indicate to the UE the maximum number of MIMO layers (e.g., via a designated indicator, for example, a MIMO layer indicator, etc.), which can inform the UE that the BS (e.g., gNB, etc.) will schedule MIMO transmission with a number of MIMO layers equal to or less than the indicated value. The indicated number of MIMO layers can be used at the UE to autonomously select (e.g., via processor(s) 410) the number of receiving chains and reduce the power consumption. The maximum number of MIMO layers indicated via the configuration signaling can vary from 1 to the maximum MIMO capability of the UE on a given component carrier. Given dynamic traffic variation, the indication of the number of MIMO layers for the UE should be fast and reliable enough. The control signaling used (e.g., generated by processor(s) 510, transmitted via communication circuitry 520, received via transceiver circuitry 420, and processed by processor(s) 410) for the configuration signaling can be higher layer (e.g., RRC (Radio Resource Control) or MAC (Medium Access Control)) or physical layer signaling (e.g., DCI (Downlink Control Information). In one example, MAC signaling can be employed for the configuration signaling, similar to the component carrier activation mechanism supported in LTE. If the maximum number of MIMO layer is configured for the UE, the UE can expect that PDSCH scheduling will not exceed the indicated number of MIMO layers, and thus the UE can autonomously decide (e.g., via processor(s) 510) regarding the number of receiving chains. For example, if the traffic load is small and there is no significant interference from the neighboring cells, the UE can turn off some of the receiving antennas to save the power consumption.

Additionally, in various aspects, the payload size for DCI and CSI (Channel State Information) bits can be changed (e.g., by processor(s) 410 and processor(s) 510) based on the indicated maximum number of MIMO layers in order to minimize the signalling overhead. For example, the payload size for a RI (Rank Indicator) report can be selected (e.g., by processor(s) 410) based on the number of MIMO layers as ceil(log₂(L)), where L is the minimum between (e.g., the lesser of) the number of MIMO layer indicated to the UE and the MIMO capability of the UE, and ceil(x) is the closest integer above x. In another example, the number of MCS(s) in DCI (e.g., generated by processor(s) 510, transmitted via communication circuitry 520, received via transceiver circuitry 420, and processed by processor(s) 410) can be determined (e.g., by processor(s) 410 and processor(s) 510) based on the number of MIMO layers (e.g., If 1 MIMO layer is configured by gNB, the DCI can comprise only a single MCS). In another example, the payload size for ACK/NACK bits and the reporting format can also be determined (e.g., by processor(s) 410 and processor(s) 510) based on the number of configured MIMO layers.

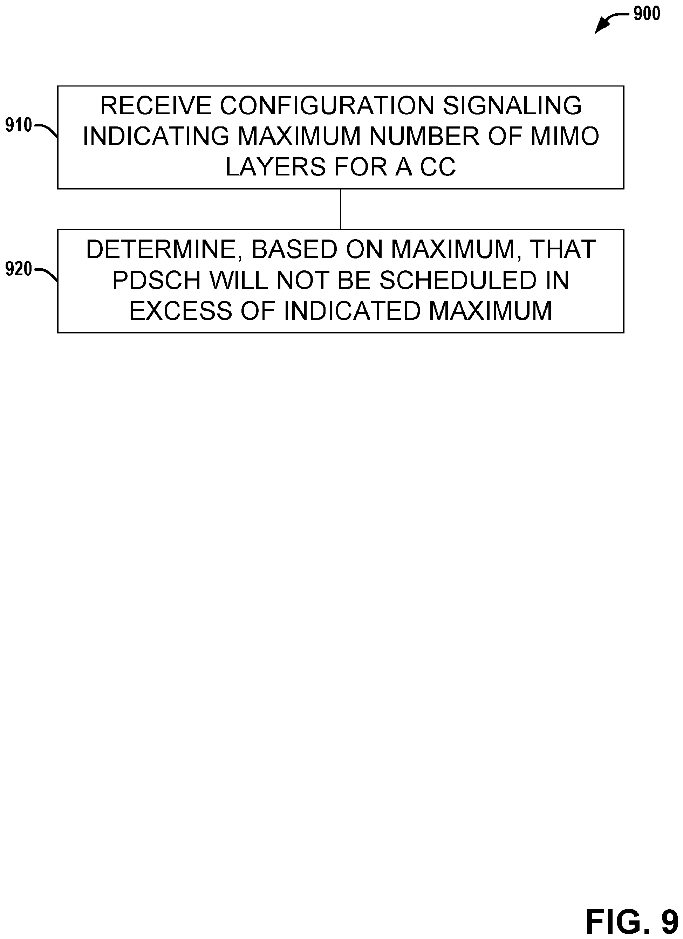

Referring to **FIG. 9**, illustrated is a flow diagram of an example method 900 employable at a UE that facilitates configuration of a maximum number of MIMO layers at the UE, according to various aspects discussed herein. In other aspects, a machine readable medium can store instructions associated with method 900 that, when executed, can cause a UE to perform the acts of method 900.

At 910, configuration signaling can be received indicating a maximum number of MIMO layers for transmission on a CC.

At 920, a determination can be made based on the indicated maximum number of MIMO layers that PDSCH will not be scheduled with MIMO layers in excess of the indicated maximum. Optionally, based on this determination, one or more receive chains or transmit chains can be turned off to conserve power at the UE, if the MIMO capability of the UE exceeds the indicated maximum.

Additionally or alternatively, method 900 can include one or more other acts described herein in connection with system 400.

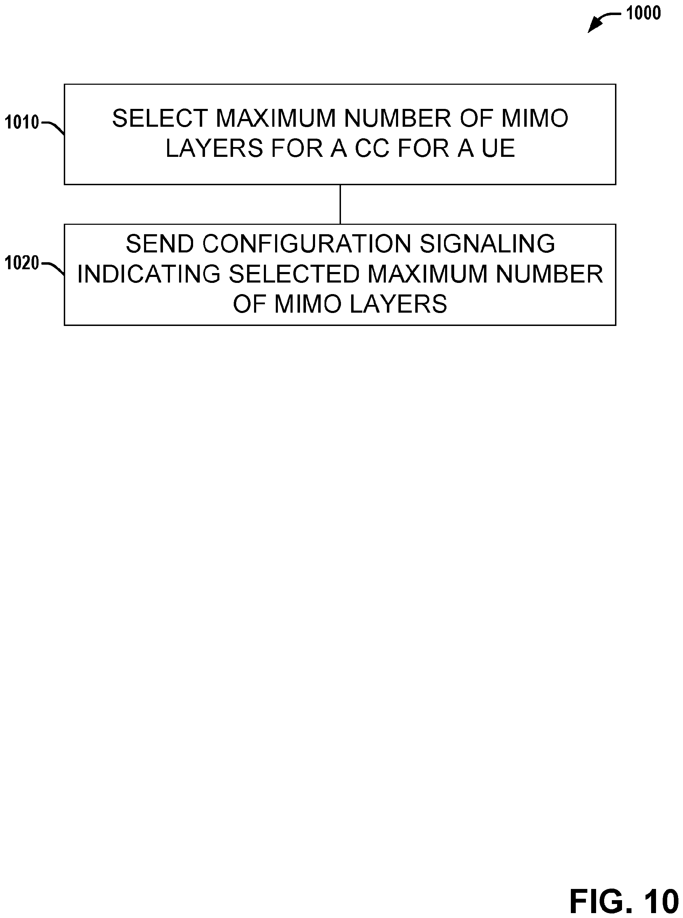

Referring to **FIG. 10**, illustrated is a flow diagram of an example method 1000 employable at a BS that facilitates configuration of a maximum number of MIMO layers for a UE, according to various aspects discussed herein. In other aspects, a machine readable medium can store instructions associated with method 1000 that, when executed, can cause a BS to perform the acts of method 1000.

At 1010, a maximum number of MIMO layers can be selected for a CC for a UE.

At 1020, configuration signaling can be sent to the UE that indicates the selected maximum number of MIMO layers.

Additionally or alternatively, method 1000 can include one or more other acts described herein in connection with system 500.

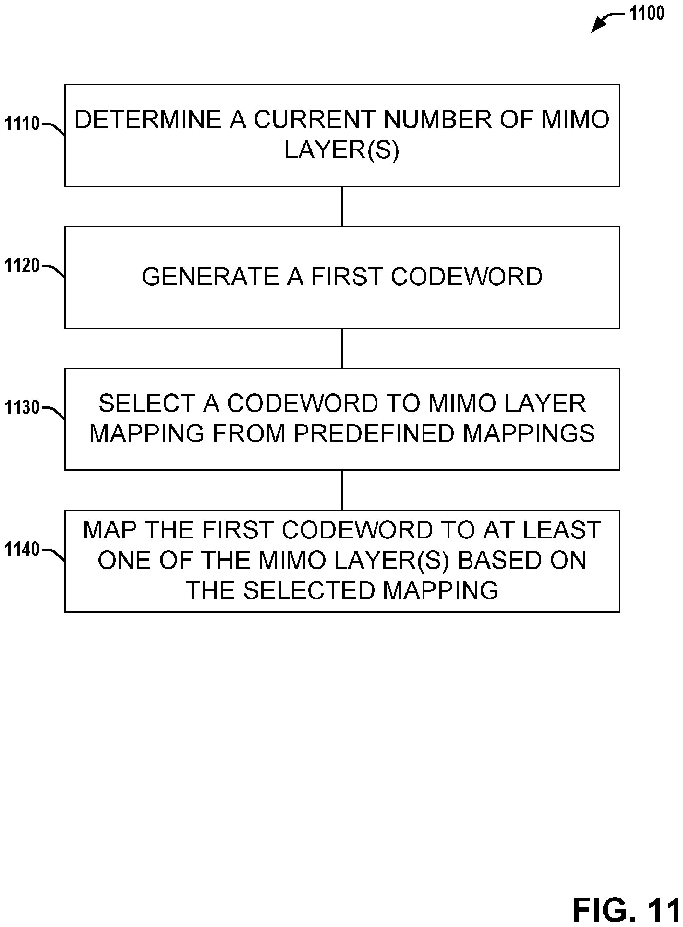

Referring to **FIG. 11**, illustrated is a flow diagram of an example method 1100 employable at a 5G NR communication device (e.g., UE, gNB, etc.) that facilitates mapping of one or more codewords to one or more MIMO layers based on the first set of techniques or the second set of techniques, according to various aspects discussed herein. In other aspects, a machine readable medium can store instructions associated with method 1100 that, when executed, can cause a 5G NR communication device to perform the acts of method 1100.

At 1110, a current number of MIMO layers can be determined (e.g., based on at least one of an indicated maximum, traffic demands, scheduled resources, etc.).

At 1120, a first codeword of one or more codewords can be generated.

At 1130, a codeword to MIMO layer mapping can be selected from a plurality of predefined mappings, for example, according to the first set of techniques (e.g., and FIG. 7) or according to the second set of techniques (e.g., and FIG. 8).

At 1140, the first codeword can be mapped to at least one MIMO layer based on the selected mapping.

Additionally or alternatively, method 1100 can include one or more other acts described herein in connection with system 400 and/or system 500.

A first example embodiment employable in connection with aspects discussed herein can comprise a method of MIMO layer transmission in NR, wherein a single codeword (e.g., a single transport block) can be used for downlink (e.g., by processor(s) 510) or uplink (e.g., by processor(s) 410) transmission (e.g., via communication circuitry 520 or transceiver circuitry 420, respectively) for a total number of one or two MIMO layers, and wherein two codewords (e.g., two transport blocks) can be used (e.g., by processor(s) 510 or processor(s) 410) for transmission (e.g., via communication circuitry 520 or transceiver circuitry 420, respectively) for a total number of three or more MIMO layers, or wherein a single codeword (e.g., a single transport block) can be used for downlink (e.g., by processor(s) 510) or uplink (e.g., by processor(s) 410) transmission (e.g., via communication circuitry 520 or transceiver circuitry 420, respectively) for a total number of one, two, three or four MIMO layers and two codewords (e.g., two transport blocks) can be used (e.g., by processor(s) 510 or processor(s) 410) for transmission (e.g., via communication circuitry 520 or transceiver circuitry 420, respectively) for a total number of five or more MIMO layers.

In various aspects of the first example embodiment, the codeword to MIMO layer mapping (e.g., by processor(s) 510 or processor(s) 410) can be according to FIG. 8 or FIG. 9.

In various aspects of the first example embodiment, the modulation order for the single CW or one of the two CWs can be different across distinct MIMO layers associated with that CW.

A second example embodiment employable in connection with aspects discussed herein can comprise a method of a BS (e.g., employing system 500) sending an indication (e.g., via configuration signaling generated by processor(s) 510, transmitted via communication circuitry 520, received via transceiver circuitry 420, and processed by processor(s) 410) to a UE (e.g., employing system 400) of a maximum number of MIMO layers, wherein the UE can determine (e.g., via processor(s) 410) based on the indication that downlink and/or uplink data channel scheduling will have a number of MIMO layers less than or equal to the maximum number of MIMO layers indicated by the BS (e.g., gNB, etc.).

In various aspects of the first example embodiment, the maximum number of scheduled (e.g., via DCI generated by processor(s) 510, transmitted via communication circuitry 520, received via transceiver circuitry 420, and processed by processor(s) 410) MIMO layers by the BS is the minimum of the indicated maximum number of MIMO layers and a MIMO capability of the UE on a given component carrier.

In various aspects of the first example embodiment, the payload size for uplink control information can be derived (e.g., by processor(s) 410 or processor(s) 510) based on the indicated maximum number of MIMO layers. In various such aspects, the payload size for a rank indicator report can be derived (e.g., by processor(s) 410 or processor(s) 510) based on an indicated maximum number of MIMO layers, as ceil(log₂(L)), where L is the minimum between (a) the indicated maximum number of MIMO layers indicated to the UE and (b) a MIMO capability of the UE, wherein ceil(x) is a closest integer above x (e.g., the smallest integer greater than or equal to x). In various such aspects, the payload size for an ACK/NACK report can be derived (e.g., by processor(s) 410 or processor(s) 510) based on the indicated maximum number of MIMO layers.

In various aspects of the first example embodiment, the payload size for downlink control information can be derived (e.g., by processor(s) 410 or processor(s) 510) based on the indicated maximum number of MIMO layers. In various such aspects, the number of modulation and coding schemes (MCS) indices in DCI can be selected (e.g., by processor(s) 510) based on the number of transport blocks associated with the indicated maximum number of MIMO layers.

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

## Claims

1. A baseband, BB, processor (410) for a User Equipment, UE (101) configured to perform operations comprising:
processing a configuration signaling comprising an indication of an indicated maximum number of Multiple Input Multiple Output, MIMO, layers for a Component Carrier, CC;
wherein the indication of the indicated maximum number of MIMO layers is an implicit indication via an indication of a number of codeword or codewords and an associated codeword to MIMO layer mapping scheme;
determining, based on the indication, that Physical Downlink Shared Channel, PDSCH, scheduled on the CC will have a number of MIMO layers less than or equal to the indicated maximum number of MIMO layers;
wherein, when the indicated maximum number of MIMO layers is up to four, the number of codeword or codewords is always one; and
performing a reception of the PDSCH, based on the indicated maximum number of MIMO layers.

2. The BB processor (410) of claim 1, wherein the operations further comprise determining a current maximum number of MIMO layers, wherein the current maximum number of MIMO layers is a minimum between the indicated maximum number of MIMO layers for the CC and a MIMO capability of the UE (101).

3. The BB processor (410) of any of claims 1-2, wherein the operations further comprise encoding an Uplink Control Information, UCI, message, wherein a payload size of the UCI message is based at least in part on the indicated maximum number of MIMO layers for the CC.

4. The BB processor (410) of any of the claims 1-3, wherein the operations further comprise generating one or more of a Rank Indicator, RI, report, a Channel Quality Indicator, CQI, report, or a Precoding Matrix Indicator, PMI, report, wherein a payload size of each of the one or more of the RI report, the CQI report, or the PMI report is based at least in part on one of the indicated maximum number of MIMO layers for the CC or the indicated maximum number of MIMO layers for the CC and a MIMO capability of the UE (101).

5. The BB processor (410) of claim 4, wherein the payload size of each of the one or more of the RI report, the CQI report, or the PMI report is a smallest integer greater than or equal to a base 2 logarithm of one of the maximum number of MIMO layers for the CC or of a minimum between the indicated maximum number of MIMO layers for the CC and the MIMO capability of the UE (101).

6. The BB processor (410) of claim 4, wherein the operations further comprise generating a CSI report comprising the CQI report, the PMI report and the RI report, wherein a payload size of the CSI report is based on a default value for a maximum number of MIMO layers according to a single codeword.

7. The BB processor (410) of any of claims 1-6, wherein the operations further comprise generating Acknowledgement/ Negative Acknowledgement, ACK/NACK, feedback, wherein a payload size of the ACK/NACK feedback is based at least in part on the indicated maximum number of MIMO layers for the CC.

8. The BB processor (410) of any of claims 1-7, wherein the operations further comprise decoding a Downlink Control Information, DCI, message, wherein the DCI message has a payload size based at least in part on the indicated maximum number of MIMO layers for the CC.

9. The BB processor (410) of claim 8, wherein the DCI message comprises at least one of Modulation and Coding Scheme, MCS, indices, one or more Redundancy Version, RV, indices, one or more New Data Indicator, NDI, indices, or one or more Hybrid Automatic Repeat Request, HARQ, process indices, wherein a number of each of the at least one of the MCS indices, the one or more RV indices, the one or more NDI indicates, or the one or more HARQ process indices is based on a number of Transport Blocks, TBs, associated with the indicated maximum number of MIMO layers for the CC.

10. The BB processor (410) of claim 8, wherein the DCI message comprises, as default values, a single Modulation and Coding Scheme, MCS, index, a single Redundancy Version, RV, index, a single New Data Indicator, NOi, index, and a single Hybrid Automatic Repeat Request, HARQ, process index.

11. The BB processor (410) of any of claims 1-10, wherein the indicated maximum number of MIMO layers is less than a MIMO capability of the UE (110), the operations further comprise selecting one or more of at least one receive chain or at least one transmit chain to turn off based on the indicated maximum number of MIMO layers for the CC.

12. The BB processor (410) of any of claims 1-11, wherein the configuration signaling comprises one of Radio Resource Control, RRC, signaling, Medium Access Control, MAC, signaling, or Downlink Control Information, DCI, signaling.

13. A base station, BS, (500) comprising:
a memory interface; and
processing circuitry (510) configured to:
select a selected maximum number of Multiple Input Multiple Output, MIMO, layers for a User Equipment, UE (101), for at least one of a Downlink, DL, or an Uplink, UL, over a Component Carrier, CC;
generate a configuration signaling comprising an indication of the selected maximum number of MIMO layers for the UE (101);
wherein the indication of the selected maximum number of MIMO layers is an implicit indication via an indication of a number of codeword or codewords and an associated codeword to MIMO layer mapping scheme, wherein, when the indicated selected maximum number of MIMO layers is up to four, the number of codeword or codewords is always one; and
send the configuration signaling to the UE and schedule a transmission on a Physical Downlink Shared Channel, PDSCH, based on the indicated maximum number of MIMO layers.

14. The BS (500) of claim 13, wherein the configuration signaling comprises one of Radio Resource Control, RRC, signaling, Medium Access Control, MAC, signaling, or Downlink Control Information, DCI, signaling.

## Patentansprüche

1. Basisband-, BB-, Prozessor (410) für ein Benutzergerät, UE (101), der konfiguriert ist, um Operationen durchzuführen, umfassend:
Verarbeiten einer Konfigurationssignalisierung, die eine Angabe einer angegebenen maximalen Anzahl von Multile Input Multiple Output-, MIMO-, Schichten für einen Component Carrier, CC, umfasst;
wobei die Angabe der angegebenen maximalen Anzahl von MIMO-Schichten eine implizite Angabe über eine Angabe einer Anzahl von Codewort oder Codewörtern und eines zugeordneten Codewort-zu-MIMO-Schicht-Abbildungsschemas ist;
Bestimmen, basierend auf der Angabe, dass ein Physical Downlink Shared Channel, PDSCH, der auf dem CC geplant ist, eine Anzahl von MIMO-Schichten aufweisen wird, die kleiner oder gleich der angegebenen maximalen Anzahl von MIMO-Schichten ist;
wobei, wenn die angegebene maximale Anzahl von MIMO-Schichten bis zu vier beträgt, die Anzahl von Codewort oder Codewörtern immer eins ist; und
Durchführen eines Empfangs des PDSCH, basierend auf der angegebenen maximalen Anzahl von MIMO-Schichten.

2. BB-Prozessor (410) nach Anspruch 1, wobei die Operationen ferner ein Bestimmen einer aktuellen maximalen Anzahl von MIMO-Schichten umfassen, wobei die aktuelle maximale Anzahl von MIMO-Schichten ein Minimum zwischen der angegebenen maximalen Anzahl von MIMO-Schichten für den CC und einer MIMO-Fähigkeit des UE (101) ist.

3. BB-Prozessor (410) nach einem der Ansprüche 1-2, wobei die Operationen ferner ein Codieren einer Uplink-Steuerinformations-, UCI-, Nachricht umfassen, wobei eine Nutzlastgröße der UCI-Nachricht zumindest teilweise auf der angegebenen maximalen Anzahl von MIMO-Schichten für den CC basiert.

4. BB-Prozessor (410) nach einem der Ansprüche 1-3, wobei die Operationen ferner ein Erzeugen eines oder mehrerer eines Rank Indikator-, RI-, Berichts, eines Channel Quality Indicator-, CQI-, Berichts oder eines Precoding Matrix Indicator-, PMI-, Berichts umfassen, wobei eine Nutzlastgröße jedes des einen oder der mehreren des RI-Berichts, des CQI-Berichts oder des PMI-Berichts zumindest teilweise auf einer der angegebenen maximalen Anzahl von MIMO-Schichten für den CC oder der angegebenen maximalen Anzahl von MIMO-Schichten für den CC und einer MIMO-Fähigkeit des UE (101) basiert.

5. BB-Prozessor (410) nach Anspruch 4, wobei die Nutzlastgröße jedes des einen oder der mehreren des RI-Berichts, des CQI-Berichts oder des PMI-Berichts eine kleinste ganze Zahl größer oder gleich einem Basis-2-Logarithmus einer der maximalen Anzahl von MIMO-Schichten für den CC oder eines Minimums zwischen der angegebenen maximalen Anzahl von MIMO-Schichten für den CC und der MIMO-Fähigkeit des UE (101) ist.

6. BB-Prozessor (410) nach Anspruch 4, wobei die Operationen ferner ein Erzeugen eines CSI-Berichts umfassen, der den CQI-Bericht, den PMI-Bericht und den RI-Bericht umfasst, wobei eine Nutzlastgröße des CSI-Berichts auf einem Standardwert für eine maximale Anzahl von MIMO-Schichten gemäß einem einzelnen Codewort basiert.

7. BB-Prozessor (410) nach einem der Ansprüche 1-6, wobei die Operationen ferner ein Erzeugen einer Acknowledgement/Negative Acknowledgement, ACK/NACK, -Rückmeldung umfassen, wobei eine Nutzlastgröße der ACK/NACK-Rückmeldung zumindest teilweise auf der angegebenen maximalen Anzahl von MIMO-Schichten für den CC basiert.

8. BB-Prozessor (410) nach einem der Ansprüche 1-7, wobei die Operationen ferner ein Decodieren einer Downlink-Steuerinformations-, DCI-, Nachricht umfassen, wobei die DCI-Nachricht eine Nutzlastgröße aufweist, die zumindest teilweise auf der angegebenen maximalen Anzahl von MIMO-Schichten für den CC basiert.

9. BB-Prozessor (410) nach Anspruch 8, wobei die DCI-Nachricht mindestens eines von Modulation and Coding Scheme-, MCS-, Indizes, einem oder mehreren Redundancy Version-, RV-, Indizes, einem oder mehreren New Data Indicator-, NDI-, Indizes oder einem oder mehreren Hybrid Automatic Repeat Request-, HARQ-, Prozessindizes umfasst, wobei eine Anzahl von jedem des mindestens einen der MCS-Indizes, des einen oder der mehreren RV-Indizes, des einen oder der mehreren NDI-Indizes oder des einen oder der mehreren HARQ-Prozessindizes auf einer Anzahl von Transport Blocks, TBS, basiert, die der angegebenen maximalen Anzahl von MIMO-Schichten für den CC zugeordnet sind.

10. BB-Prozessor (410) nach Anspruch 8, wobei die DCI-Nachricht als Standardwerte einen einzelnen Modulation and Coding Scheme-, MCS-, Index, einen einzelnen Redundancy Version-, RV-, Index, einen einzelnen New Data Indicator-, NOI-, Index und einen einzelnen Hybrid Automatic Repeat Request-, HARQ-, Prozessindex umfasst.

11. BB-Prozessor (410) nach einem der Ansprüche 1-10, wobei die angegebene maximale Anzahl von MIMO-Schichten kleiner als eine MIMO-Fähigkeit des UE (110) ist, wobei die Operationen ferner ein Auswählen einer oder mehrerer von mindestens einer Empfangskette oder mindestens einer Sendekette zum Abschalten basierend auf der angegebenen maximalen Anzahl von MIMO-Schichten für den CC umfassen.

12. BB-Prozessor (410) nach einem der Ansprüche 1-11, wobei die Konfigurationssignalisierung eines von einer Radio Resource Control-, RRC-, Signalisierung, einer Medium Access Control-, MAC-, Signalisierung oder einer Downlink Control Information-, DCI-, Signalisierung umfasst.

13. Basisstation, BS, (500), umfassend:
eine Speicherschnittstelle; und
eine Verarbeitungsschaltung (510), die konfiguriert ist, um:
eine ausgewählte maximale Anzahl von Multile Input Multiple Output-, MIMO-, Schichten für ein Benutzergerät, UE (101), für mindestens eines von einem Downlink, DL, oder einem Uplink, UL, über einen Component Carrier, CC, auszuwählen;
eine Konfigurationssignalisierung zu erzeugen, die eine Angabe der ausgewählten maximalen Anzahl von MIMO-Schichten für das UE (101) umfasst;
wobei die Angabe der ausgewählten maximalen Anzahl von MIMO-Schichten eine implizite Angabe über eine Angabe einer Anzahl von Codewort oder Codewörtern und eines zugeordneten Codewort-zu-MIMO-Schicht-Abbildungsschemas ist, wobei, wenn die angegebene ausgewählte maximale Anzahl von MIMO-Schichten bis zu vier beträgt, die Anzahl von Codewort oder Codewörtern immer eins ist; und
die Konfigurationssignalisierung an das UE zu senden und eine Übertragung auf einem Physical Downlink Shared Channel, PDSCH, basierend auf der angegebenen maximalen Anzahl von MIMO-Schichten zu planen.

14. BS (500) nach Anspruch 13, wobei die Konfigurationssignalisierung eines von einer Radio Resource Control-, RRC-, Signalisierung, einer Medium Access Control-, MAC-, Signalisierung oder einer Downlink Control Information-, DCI-, Signalisierung umfasst.

## Revendications

1. Un processeur de bande de base, BB, (410) pour un équipement utilisateur, UE (101) configuré pour effectuer des opérations comprenant :
le traitement d'une signalisation de configuration comprenant une indication d'un nombre maximal indiqué de couches d'entrées multiples et sorties multiples, MIMO, pour une porteuse composante, CC ;
où l'indication du nombre maximal indiqué de couches MIMO est une indication implicite via une indication du nombre du mot de code ou des mots de code et un schéma associé de mappage mot de code vers couche MIMO ;
la détermination, sur la base de l'indication, qu'un canal physique partagé de liaison descendante, PDSCH, planifié sur la CC aura un nombre de couches MIMO inférieur ou égal au nombre maximal indiqué de couches MIMO ;
où, lorsque le nombre maximal indiqué de couches MIMO vaut jusqu'à quatre, le nombre du mot de code ou des mots de code vaut toujours un ; et
la mise en œuvre d'une réception du PDSCH, sur la base du nombre maximal indiqué de couches MIMO.

2. Le processeur BB (410) de la revendication 1, dans lequel les opérations comprennent en outre la détermination d'un nombre maximal courant de couches MIMO, le nombre maximal courant de couches MIMO étant un minimum entre le nombre maximal indiqué de couches MIMO pour la CC et une capacité MIMO de l'UE (101).

3. Le processeur BB (410) de l'une des revendications 1 à 2, dans lequel les opérations comprennent en outre le codage d'un message d'information de contrôle de liaison montante, UCI, une taille de charge utile du message UCI étant basée au moins en partie sur le nombre maximal indiqué de couches MIMO pour la CC.

4. Le processeur BB (410) de l'une des revendications 1 à 3, dans lequel les opérations comprennent en outre la génération d'un ou plusieurs parmi un rapport d'indicateur de rang, RI, un rapport d'indicateur de qualité de canal, CQI, ou un rapport d'indicateur de matrice de précodage, PMI, une taille de charge utile de chacun des un ou plusieurs parmi le rapport de RI, le rapport de CQI ou le rapport de PMI étant basée au moins en partie sur l'un parmi le nombre maximal indiqué de couches MIMO pour la CC ou le nombre maximal indiqué de couches MIMO pour la CC et une capacité MIMO de l'UE (101).

5. Le processeur BB (410) de la revendication 4, dans lequel la taille de charge utile de chacun des un ou plusieurs parmi le rapport de RI, le rapport de CQI ou le rapport de PMI est un plus petit entier supérieur ou égal à un logarithme en base 2 d'un parmi le nombre maximal de couches MIMO pour la CC et un minimum entre le nombre maximal indiqué de couches MIMO pour la CC et la capacité MIMO de l'UE (101).

6. Le processeur BB (410) de la revendication 4, dans lequel les opérations comprennent en outre la génération d'un rapport de CSI comprenant le rapport de CQI, le rapport de PMI et le rapport de RI, dans lequel une taille de charge utile du rapport de CSI est basée sur une valeur par défaut pour un nombre maximal de couches MIMO en fonction d'un mot de code unique.

7. Le processeur BB (410) de l'une des revendications 1 à 6, dans lequel les opérations comprennent en outre la génération d'un retour d'accusé de réception/accusé de réception négatif, ACK/NACK, une taille de charge utile du retour ACK/NACK étant basée au moins en partie sur le nombre maximal indiqué de couches MIMO pour la CC.

8. Le processeur BB (410) de l'une des revendications 1 à 7, dans lequel les opérations comprennent en outre le décodage d'un message d'information de contrôle de liaison descendante, DCI, le message de DCI ayant une taille de charge utile basée au moins en partie sur le nombre maximal indiqué de couches MIMO pour la CC.

9. Le processeur BB (410) de la revendications 8, dans lequel le message de DCI comprend au moins l'un parmi des indices de schéma de modulation et de codage, MCS, un ou plusieurs indices de version de redondance, RV, un ou plusieurs indices d'indicateur de nouvelles données, NDI, ou un ou plusieurs indices de processus de requête de répétition automatique hybride, HARQ, un nombre de chacun de l'au moins un parmi les un ou plusieurs indices de MCS, les un ou plusieurs indices de RV, les un ou plusieurs indices de NDI, ou les un ou plusieurs indices de processus de HARQ étant basé sur un nombre de blocs de transport, TB, associés au nombre maximal indiqué de couches MIMO pour la CC.

10. Le processeur BB (410) de la revendication 8, dans lequel le message de DCI comprend, comme valeurs par défaut, un unique indice de schéma de modulation et de codage, MCS, un unique indice de version de redondance, RV, un unique indice d'indicateur de nouvelles données, NDI, et un unique indice de processus de requête de répétition automatique hybride, HARQ.

11. Le processeur BB (410) de l'une des revendications 1 à 10, dans lequel le nombre maximal indiqué de couches MIMO est inférieur à une capacité MIMO de l'UE (110), dans lequel la circuiterie de traitement (410) est configurée en outre pour sélectionner une ou plusieurs parmi au moins une chaîne de réception ou au moins une chaîne de transmission à désactiver sur la base du nombre maximal indiqué de couches MIMO pour la CC.

12. Le processeur BB (410) de l'une des revendications 1 à 11, dans lequel la signalisation de configuration comprend l'une parmi une signalisation de contrôle de ressource radio, RRC, une signalisation de contrôle d'accès au support, MAC, ou une signalisation d'information de contrôle de liaison descendante, DCI.

13. Une station de base, BS, (500) comprenant :
une interface mémoire ; et
une circuiterie de traitement (510) configurée pour :
sélectionner un nombre maximal indiqué de couches d'entrées multiples et sorties multiples, MIMO, pour un équipement utilisateur, UE (101), pour au moins l'une parmi une liaison descendante, DL, ou une liaison montante, UL, sur une porteuse composante, CC ;
générer une signalisation de configuration comprenant une indication du nombre maximal sélectionné de couches MIMO pour l'UE (101) ;
l'indication du nombre maximal indiqué de couches MIMO étant une indication implicite via une indication du nombre du mot de code ou des mots de code et un schéma associé de mappage de mot de code à couche MIMO ;
où, lorsque le nombre maximal indiqué de couches MIMO vaut jusqu'à quatre, le nombre du mot de code ou des mots de code vaut toujours un ; et
l'envoi à l'UE de la signalisation de configuration et la planification d'une transmission sur un canal physique partagé de liaison descendante, PDSCH, sur la base du nombre maximal indiqué de couches MIMO.

14. La BS (500) de la revendication 13, dans laquelle la signalisation de configuration comprend l'une parmi une signalisation de contrôle de ressource radio, RRC, une signalisation de contrôle d'accès au support, MAC, ou une signalisation d'information de contrôle de liaison descendante, DCI.
